# EUROPEAN PATENT SPECIFICATION

(11) **EP 0 303 268 B1**
(45) Date of publication and mention of the grant of the patent: **10.03.1993**
(21) Application number: 88113062.9
(22) Date of filing: 11.08.1988
(51) Int. Cl.: B62D 25/20, B60R 13/08, B05D 1/32, B05C 21/00

(54) **A method for making metal structures corrosion,sound and vibration-proof**
Methode, um Metallstrukturen korrosionsbeständig, schalldicht und erschütterungssicher zu machen
Méthode pour faire des structures en métal anticorrosif insonore et résistant aux vibrations

(30) Priority: 12.08.1987 JP 201309/87; 24.09.1987 JP 239249/87
(43) Date of publication of application: 15.02.1989
(73) Proprietor: NAGOYA OILCHEMICAL CO., LTD., Tokai-shi Aichi (JP)
(72) Inventor: Horiki, Seinosuke c/o NAGOYA OILCHEMICAL CO.,LTD., Tokai-shi Aichi (JP); Makino, Reiji c/o NAGOYA OILCHEMICAL CO.,LTD., Tokai-shi Aichi (JP)
(74) Representative: VOSSIUS & PARTNER

(56) References cited:
- EP-A- 0 207 720
- DE-A- 2 034 180
- FR-A- 1 451 734
- GB-A- 2 143 463
- US-A- 4 255 482

## Description

The present invention relates to a new method for making metal structures, such as the underside of the floor of cars, corrosion, sound and vibration-proof. More particularly, the present invention relates to a new method for making metal structures corrosion, sound and vibration-proof, said method comprising masking the necessary parts of the surface of said metal structures with masking members manufactured by vacuum forming of a thermoplastic foam sheet, and coating a visco-elastic layer on the surface of said metal structures.

Visco-elastic materials such as synthetic resin, rubber, asphalt are coated on the surface of a metal structure such as the underside of the floor of cars for the purpose of corrosion, sound, and vibration proofing. Said coating layer of visco-elastic materials covers the surface of said metal structure to protect said surface from flying stones; it seals the joined parts of the surface from water and corrosion. At the same time, said coating layer absorbs sound from the outside and vibration of the surface of said metal structure to exhibit a sound and vibration-proofing effect. Accordingly, said coating layer must be thick for a remarkable sound and vibration-proofing effect and usually the desirable thickness of said coating layer may be 500 to 2000 µm. Therefore, said thick coating layer obstructs the firm attachment of parts such as bolts, nuts, brackets, frames and the like to the surface of said metal structure.

Further, said metal structure usually has many holes for cables, operation wires and the like, and for drainage and the like. In cases where said metal structure has holes, said visco-elastic material must be prevented from going into said holes when said visco-elastic material is coated on the surface of said metal structure. Especially in cars, said visco-elastic material must be prevented from going into the holes that are in the outer panel which would give a bad appearance.

Therefore, it is necessary to protect such parts of said metal structure by masking members and then coat the surface of said metal structure with said visco-elastic material. After coating, said masking members may be removed from said surface of said metal structure.

Hitherto, adhesive tape has been used as a masking member to protect a part of a metal structure from the coating of said visco-elastic material. Namely, adhesive tape is attached to a part of a metal structure to protect it from said coating and, after the coating, said adhesive tape is removed from the part of said metal structure. Said part is not coated with said visco-elastic material since said part was covered with adhesive tape during surface treatment.

Said adhesive tape as a masking member has faults. In cases where the part to be protected from the coating is wide, it is troublesome to attach adhesive tape to the part to be protected and remove said adhesive tape from said part since a number of strips of adhesive tape must be attached to said part to cover the whole part, and further, in a case where the part to be protected from the coating is protruding, it is also troublesome to wind adhesive tape over and over again around the part to be protected and remove said adhesive tape from said part.

Still further, adhesive tape attached to the part to to be protected is buried in the coating layer and it is very difficult to find said buried adhesive tape and, of course, it is very difficult to remove said buried adhesive tape.

Still further, it is very difficult to cover only the necessary parts of a metal structure by adhesive tape resulting in that parts which are not covered with the visco-elastic layer may remain.

DE-A-2 034 180 describes a method for surface treatment of metal structures having the steps of masking parts of the surface to be protected from a surface treatment with masking members, performing the surface treatment, and removing said masking members from said parts of the surface.

Accordingly, an object of the present invention is to save trouble when the masking member is attached/removed to/from said part to be protected.

According to the present invention, there is provided a method for making metal structures corrosion, sound, and vibration-proof, said method comprising masking the necessary parts of the surface of said metal structures with masking members manufactured by vacuum forming of a thermoplastic foam sheet, coating a visco-elastic layer on the surface of said metal structures, and removing said masking members from said surface of said metal structures. The body of the masking member is manufactured by vacuum forming of a thermoplastic foam sheet, such as a polystyrene foam sheet, a polyethylene foam sheet, a polypropylene foam sheet and the like, and one side or both sides of said thermoplastic foam may be laminated with a thermoplastic film such as polyethylene film, polypropylene film, polyvinylchloride film, polyamide film, polystyrene film, and desirably high impact polystyrene film. Further said body may be colored by a suitable color if desired, for the purpose of selection of the specified masking member according to the part to be protected.

The visco-elastic material used in the present invention may be plastic, rubber, asphalt, pitch and the like, and a solution, emulsion, dispersion, liquid prepolymer of said visco-elastic material or molten visco-elastic material may be used in the case of coating. Said liquid of the visco-elastic material may be such as polyvinyl chloride paste, polyvinylchloride sol, an organic solution of polyacrylate, an organic solution of styrene-butadiene rubber, polyvinyl acetate emulsion, polyacrylate emulsion, styrene-butadiene rubber latex, an emulsion of ethylene-vinyl acetate copolymer, polyurethane emulsion, asphalt emulsion, petroleum resin emulsion, polyethylene emulsion, molten ethylene-vinyl acetate copolymer, molten asphalt, molten petroleum resin, molten polyethylene, urethane prepolymer, unsaturated polyester resin and the like. Two or more kinds of said visco-elastic materials may be mixed together in the present invention.

The invention is described in detail in connection with the drawings in which
Figure 1 is a perspective view of a first embodiment of the present invention.
Figure 2 is a partial side sectional view of the first embodiment of the present invention after coating of the visco-elastic material.
Figure 3 is a partial side sectional view of the first embodiment of the present invention in the case of removing the masking member from the metal structure.
Figure 4 is a perspective view of a second embodiment of the present invention.
Figure 5 is a perspective view of a third embodiment of the present invention.
Figure 6 is a partial side sectional view of the third embodiment of the present invention after coating of the visco-elastic material.
Figure 7 is a partial perspective view of the third embodiment of the present invention in the case of said third embodiment being produced.
Figure 8 is a perspective view of a fourth embodiment of the present invention.
Figure 9 is a perspective view of a fifth embodiment of the present invention.
Figure 10 is a perspective view of a sixth embodiment of the present invention.
Figure 11 is a side sectional view of the sixth embodiment of the present invention.
Figure 12 is a perspective view of a seventh embodiment of the present invention.
Figure 13 is a perspective view of an eighth embodiment of the present invention.
Figure 14 is a perspective view of a ninth embodiment of the present invention.
Figure 15 is a perspective view of a tenth embodiment of the present invention.
Figure 16 is a perspective view of an eleventh embodiment of the present invention.
Figure 17 is a perspective view of the eleventh embodiment of the present invention in the case of said eleventh embodiment being produced.
Figure 18 is a partial side sectional view of the eleventh embodiment of the present invention after coating of the visco-elastic material.
Figure 19 is a partial side sectional view of the eleventh embodiment of the present invention in the case of removing the masking member from the metal structure.
Figure 20 is a partial side sectional view of the eleventh embodiment of the present invention in case of protection of a protruding part.
Figure 21 is a perspective view of a twelfth embodiment of the present invention.
Figure 22 is a partial side sectional view of the twelfth embodiment of the present invention after coating of the visco-elastic material.
Figure 23 is a perspective view of a thirteenth embodiment of the present invention.
Figure 24 is a perspective view of a fourteenth embodiment of the present invention.
Figure 25 is a perspective view of a fifteenth embodiment of the present invention.
Figure 26 is a partial side sectional view of the fifteenth embodiment of the present invention after coating of the visco-elastic material.
Figure 27 is a perspective view of a sixteenth embodiment of the present invention.
Figure 28 is a partial side sectional view of the sixteenth embodiment of the present invention after coating of the visco-elastic material.
Figure 29 is a perspective view of the seventeenth embodiment of the present invention.
Figure 30 is a partial side sectional view of the seventeenth embodiment of the present invention.
Figure 31 is a partial side sectional view of the seventeenth embodiment of the present invention in the case of removing the masking member from the metal structure.
Figure 32 is a perspective view of the eighteenth embodiment of the present invention.
Figure 33 is a partial side sectional view of the eighteenth embodiment of the present invention after coating of the visco-elastic material.
Figure 34 is a perspective view of the nineteenth embodiment of the present invention.
Figure 35 is a perspective view of the twentieth embodiment of the present invention.
Figure 36 is a perspective view of the twentyfirst embodiment of the present invention.
Figure 37 is a perspective view of the twentysecond embodiment of the present invention.
Figure 38 is a perspective view of the twentythird embodiment of the present invention.
Figure 39 is a partial side sectional view of the twentythird embodiment of the present invention after coating of the visco-elastic layer.
Figure 40 is a side sectional view of the twentyfourth embodiment of the present invention.
Figure 41 is a perspective view of the twentyfifth embodiment of the present invention.
Figure 42 is a perspective view of the twentysixth embodiment of the present invention.
Figure 43 is a perspective view of the twentyseventh embodiment of the present invention.
Figure 44 is a perspective view of the twentyeighth embodiment of the present invention.
Figure 45 is a perspective view of the twentyninth embodiment of the present invention.
Figure 46 is a partial side sectional view of the twentyninth embodiment after coating of the visco-elastic material.
Figure 47 is a perspective view of the thirtieth embodiment of the present invention.
Figure 48 is a partial side sectional view of the thirtieth embodiment of the present invention.
Figure 49 is a perspective view of the thirtyfirst embodiment of the present invention.
Figure 50 is a partial side sectional view of the thirtyfirst embodiment of the present invention.
Figure 51 is a perspective view of the thirtysecond embodiment of the present invention.
Figure 52 is a perspective view of the thirtythird embodiment of the present invention.
Figure 53 is a partial side sectional view of the thirtythird embodiment after coating of the visco-elastic material.
Figure 54 is a partial sectional view of the thirtythird embodiment in the case of removing the masking member from the metal structure.
Figure 55 is a perspective view of the thirtyfourth embodiment of the present invention.
Figure 56 is a perspective view of a car body of a practical example of the present invention.
Figure 57 is a perspective view of Part A to be protected by the masking member of the practical example.
Figure 58 is a perspective view of Part B to be protected by the masking member of the practical example.
Figure 59 is a perspective view of Part C to be protected by the masking member of the practical example.
Figure 60 is a perspective view of Part D to be protected by the masking member of the practical example.
Figure 61 is a perspective view of Part E to be protected by the masking member of the practical example.

### [Masking member A]

Masking member A is used to protect the even surfaces of the metal structure.

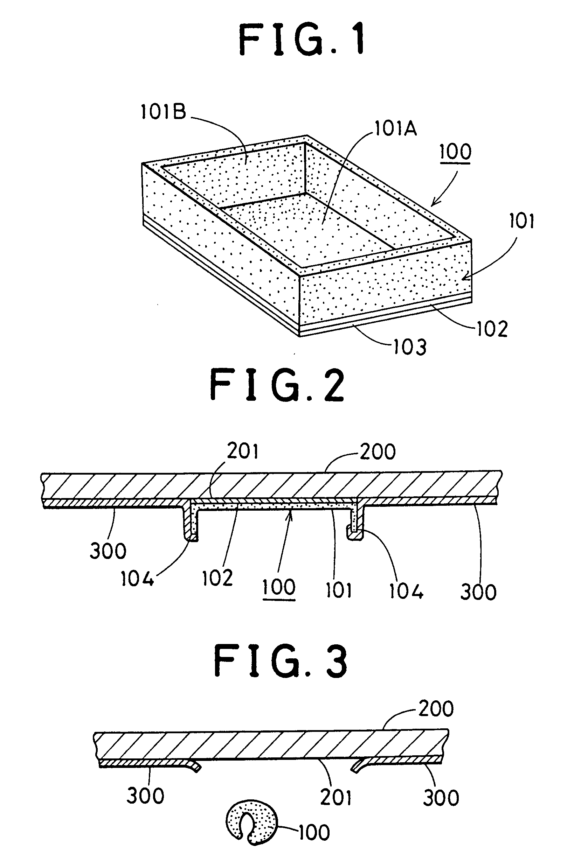

Figure 1 to Figure 3 relate to a first embodiment of the present invention. Referring now to Fig. 1 to Fig. 3, a masking member 100 comprises a body 101 having a vessel form consisting of a rectangular bottom 101A and perpendicular walls 101B which extend upwards from the perimeter of said bottom 101A, with said body 101 manufactured by vacuum forming of a thermoplastic foam sheet. An adhesive layer 102 such as the pressure sensitive adhesive layer is formed on the under surface of said body 101 and said adhesive layer 102 is covered with a release sheet 103 such as a polyethylene film, a polypropylene film, a release paper and the like to prevent sticking to another article, the hands of workers and the like when the masking members are handled, one placed upon another, transported, and the like.

When said masking member 100 is used, said release sheet 103 is removed from said adhesive layer 102 and said masking member 100 is then attached to an even part 201 of the surface of a metal structure 200 such as the underside of the floor of cars by said adhesive layer 102 thereof, which is necessary to be protected from a coating of visco-elastic material. After said masking member 100 is attached to said part 201, a liquid form of a visco-elastic material is coated on the surface of said metal structure 200 by such as spraying, dipping and the like to form a visco-elastic layer 300 as shown in Figure 2. Said part 201 of said surface of said metal structure 200 is not subjected to said coating since said part 201 is covered with said masking member 100 and said visco-elastic layer 300 may be cut by an edge 104 of the body 101 of said masking member 100. Said part 201 may have hole(s) and in this case, said hole(s) is(are) also not subjected to said coating. After said coated metal structure 200 is heated to dry and/or cure if desired and in cases where the heating temperature is adequately higher than the softening point of the thermoplastic foam sheet of said body 101 of said masking member 100 said masking member 100 will firstly expand and then shrink by said heating and come off by itself from said part 201 of said surface of said metal structure 200 as shown in Fig. 3. As said masking member 100 comprises a body having a vessel form, the volume of said shrunk masking member 100 may be much smaller than the apparent volume of the unshrunk masking member 100 and further, as above described, said visco-elastic layer 300 may be cut by an edge 104 of the body 101 of said masking member 100, the removing of said masking member 100 from said masking member 100 from said part 201 of said metal structure 200 may be very smooth without obstruction of said visco-elastic layer 300, Said masking member 100 may also be removed by a hook and, in this case, said masking member 100 may be easily removed without obstruction of said visco-elastic layer 300.

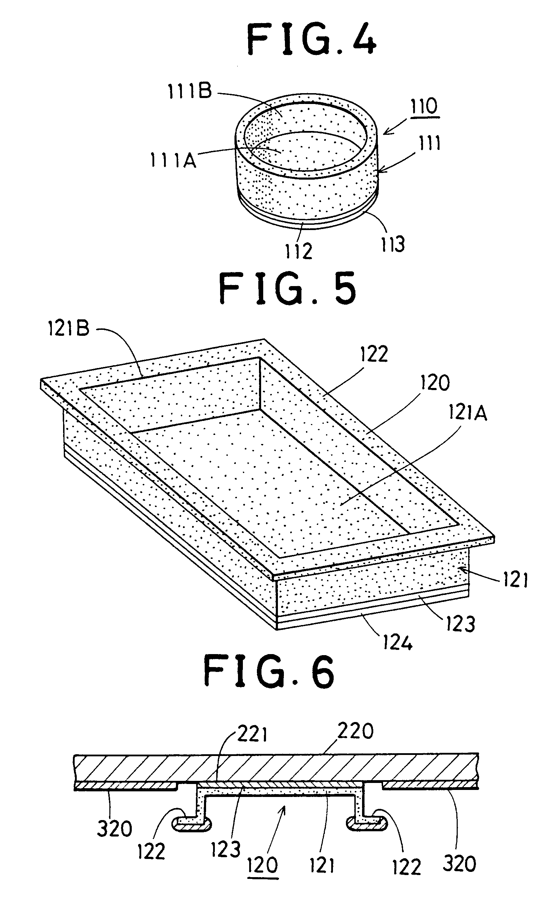

Figure 4 relates to a second embodiment of the present inverntion. In this embodiment, a masking member 110 comprises a body 111 having a vessel form consisting of a circular bottom 111A and a perpendicular wall 111B which extends upwards from the circumference of said bottom 111A, with said body 111 manufactured by vacuum forming of a thermoplastic foam sheet the same as the first embodiment of the present invention. An adhesive layer 112 is formed on the under surface of said body 111 and said adhesive layer 112 is covered with a release sheet 113 the same as the first embodiment of the present invention. Further, the body of said masking member of the present invention should have a suitable form according to the part to be protected from a surface treatment.

Figure 5 to Figure 7 relate to a third embodiment of the present invention. Referring now to Fig. 5 to Fig. 7, a masking member 120 comprises a body 121 having a vessel form consisting of a rectangular bottom 121A and perpendicular walls 121B which extend upwards from the perimeter of said bottom 121A, and a flange 122 which is extended from the upper edges of said walls 121B, with said body 121 manufactured by vacuum forming of a thermoplastic foam sheet the same as the first and second embodiments of the present invention. An adhesive layer 123 is formed on the under surface of said body 121 and said adhesive layer 123 is covered with a release sheet 124 the same as the first and second embodiments of the present invention.

When said masking member 120 is used, said release sheet 124 is removed from said adhesive layer 123 and said masking member 120 is then attached to a even part 221 of the surface of a metal structure 220 which is necessary to be protected from a surface treatment. After said masking member 120 is attached to said part 221 , said visco-elastic material is coated on said surface of said metal structure 220 to form a visco-elastic layer 320 as shown in Fig. 6. In this embodiment, said visco-elastic layer 320 may be more completely cut by said flange 122 of said masking member 120 than in the cases of the first and second embodiments of the present invention and, as the result, said masking member 120 may be more smoothly removed from said part 221 of said surface of said metal structure 220 .

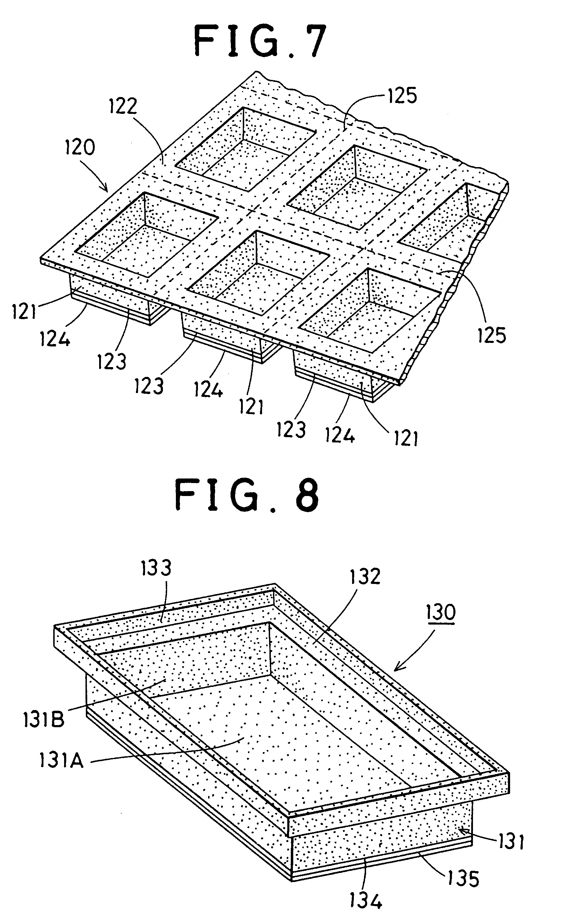

A number of masking members 120 of this embodiment may advantageously be produced by vacuum forming from a sheet of a thermoplastic foam such as a polystyrene paper (polystyrene foam sheet) and the like as shown in Fig. 7. Referring to Fig. 7, a number of bodies 121 of masking members 120 are formed arranged in rows and lines, and each body 121 is connected to the other body 121 by the flange 122 . Cutting lines 125 or grooves are formed between said flange 122 and another said flange 122 and when said masking member 120 is used, said masking member 120 is broken along said cutting lines 125 or grooves by hand. Said cutting lines 125 or grooves may be formed simultaneously with vacuum forming or after vacuum forming.

Figure 8 relates to a fourth embodiment of the present invention. In this embodiment a masking member 130 comprises a body 131 having a vessel form consisting of a rectangular bottom 131A and perpendicular walls 131B which extend upwards from the perimeter of said bottom 131A , a flange 132 which is extended from the upper edges of said walls 131B , and perpendicular walls 133 which extend upwards from the perimeter of said flange 132 , with said body 131 manufactured by vacuum forming of a thermoplastic foam sheet the same as the first, second, and third embodiments of the present invention. An adhesive layer 134 is formed on the under surface of said body 131 and said adhesive layer 134 is covered with a release sheet 135 the same as the first, second, and third embodiments of the present invention. A visco-elastic layer may be more completely cut by said perpendicular walls 133 of said flange 132 .

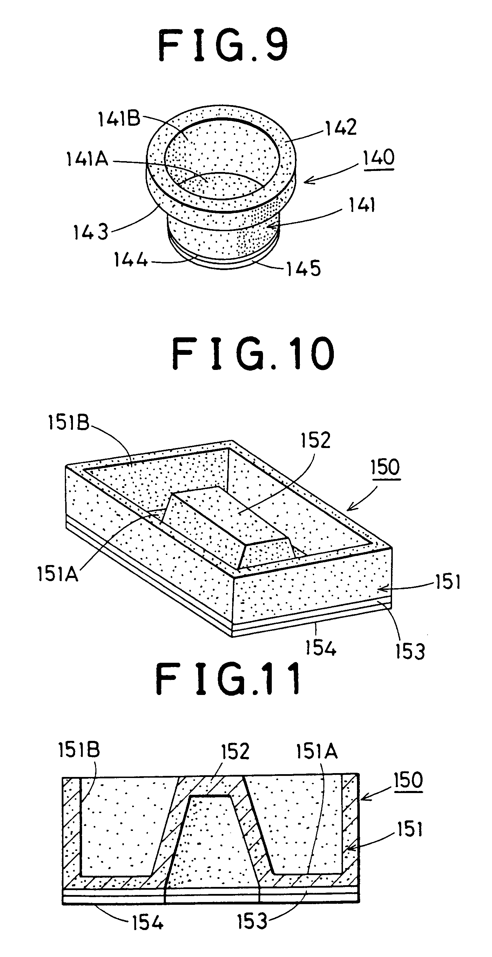

Figure 9 relates to a fifth embodiment of the present invention. In this embodiment, a masking member 140 comprises a body 141 having a vessel form consisting of a circular bottom 141A and a perpendicular wall 141B which extends upwards from the circumference of said bottom 141A , a flange 142 which is extended from the upper edges of said wall 141B , and perpendicular wall 143 which extends downwards from the circumference of said flange 142 , with said body 141 manufactured by vacuum forming of a thermoplastic foam sheet the same as the first, second, third, and fourth embodiments of the present invention. An adhesive layer 144 is formed on the under surface of said body 141 and said adhesive layer 144 is covered with a release sheet 145 the same as the first, second, third, and fourth embodiments of the present invention.

Figure 10 and Figure 11 relate to a sixth embodiment of the present invention. In this embodiment, a masking member 150 comprises a body 151 having a vessel form consisting of a rectangular bottom 151A from which a grip 152 is risen and perpendicular walls 151B which extend upwards from the perimeter of said bottom 151A , with said body 151 made of a thermoplastic foam the same as the first, second, third, fourth, and fifth embodiments of the present invention. An adhesive layer 153 is formed on the under surface of said body 151 and said adhesive layer 153 is covered with a release sheet 154 the same as the first, second, third, fourth and fifth embodiments of the present invention. The masking member 150 of this embodiment is easily handled by holding said grip 152 of said masking member 150 when said masking member 150 is attached to an even part of the surface of a metal structure which is to be protected from a coating of the visco-elastic material and further, said masking member is easily removed by piercing said grip 152 of said masking member 150 with a hook.

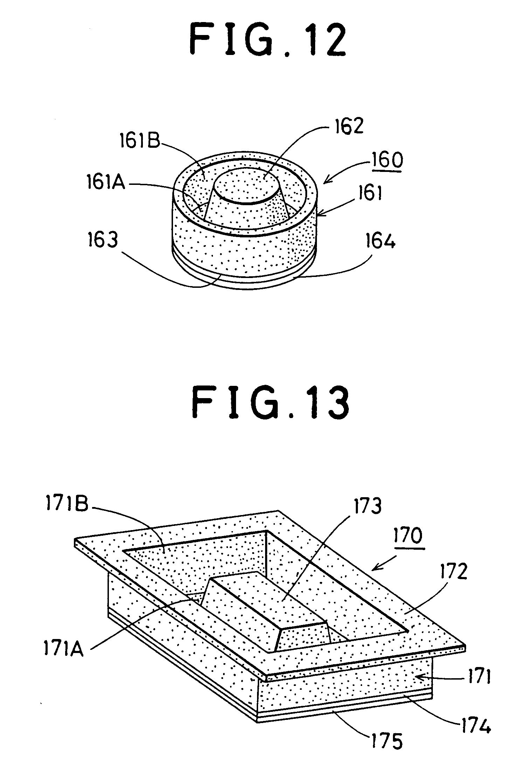

Figure 12 relates to a seventh embodiment of the present invention. In this embodiment, a masking member 160 comprises a body 161 having a vessel form consisting of a circular bottom 161A from which a grip 162 is risen and perpendicular wall which extend upwards from the circumference of said bottom 161A , with said body 161 manufactured by vacuum forming of a thermoplastic foam sheet the same as the first, second, third, fourth, fifth, and sixth embodiments of the present invention. An adhesive layer 163 is formed on the under surface of said body 161 and said adhesive layer 163 is covered with a release sheet 164 the same as the first, second, third, fourth, fifth, and sixth embodiments of the present invention.

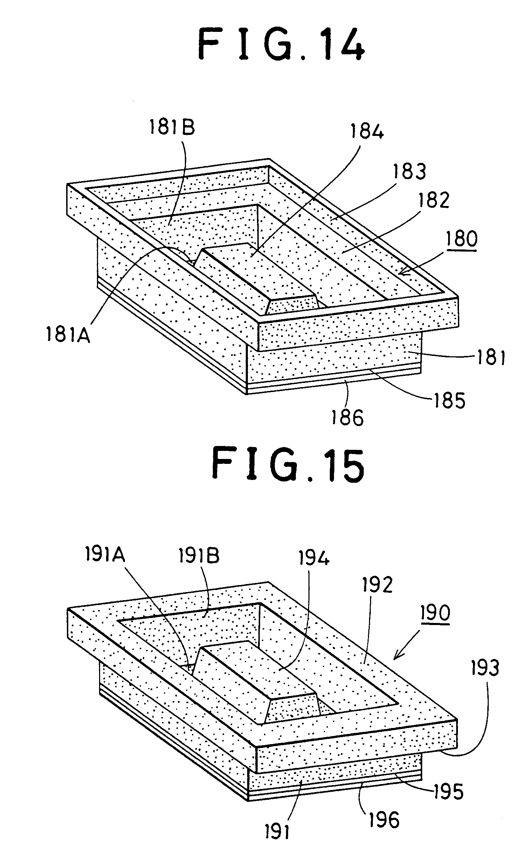

Figure 13 relates to an eighth embodiment of the present invention. In this embodiment, a masking member 170 comprises a body 171 having a vessel form consisting of a rectangular bottom 171A from which a grip 173 is risen and perpendicular walls 171B which extend upwards from the perimeter of said bottom 171A , a flange 172 which is extended from the upper edges of said walls 171B , with said body 171 manufactured by vacuum forming of a thermoplastic foam sheet the same as the first, second, third, fourth, fifth, sixth, and seventh embodiments of the present invention. An adhesive layer 174 is formed on the under surface of said body 171 and said adhesive layer 174 is covered with a release sheet 175 the same as the first, second, third, fourth, fifth, sixth and seventh embodiments of the present invention.

Figure 14 relates to a ninth embodiment of the present invention. In this embodiment, a masking member 180 comprises a body 181 having a vessel form consisting of a rectangular bottom from which a grip 184 is risen and perpendicular walls 181B which extend upwards from the perimeter of said bottom 181A , a flange 182 which is extended from the upper edges of said walls 181B , and perpendicular walls 183 which extend upwards from the perimeter of said flange 182 , with said body 181 manufactured by vacuum forming of a thermoplastic foam sheet the same as the first, second, third, fourth, fifth, sixth, seventh, and eighth embodiments of the present invention. An adhesive layer 185 is formed on the under surface of said body 181 and said adhesive layer 185 is covered with a release sheet 186 the same as the first, second, third, fourth, fifth, sixth, seventh and eighth embodiments of the present invention.

Figure 15 relates to a tenth embodiment of the present invention. In this embodiment, a masking member 190 comprises a body 191 having a vessel form consisting of a rectangular bottom 191A from which a grip is risen and perpendicular walls 191B which extend upwards from the perimeter of said bottom 191A , a flange 192 which is extended from the upper edges of said walls 191B , and perpendicular walls 193 which extend downwards from the perimeter of said flange 192 , with said body 191 manufactured by vacuum forming of a thermoplastic foam sheet the same as the first, second, third, fourth, fifth, sixth, seventh, eighth and ninth embodiments of the present invention. An adhesive layer 195 is formed on the under surface of said body 191 and said adhesive layer 195 is covered with a release sheet 196 the same as the first, second, third, fourth, fifth, sixth, seventh, eighth and ninth embodiments of the present invention.

### [Masking member B]

Masking member B is used to protect the even surfaces or the protruding parts of the metal structure.

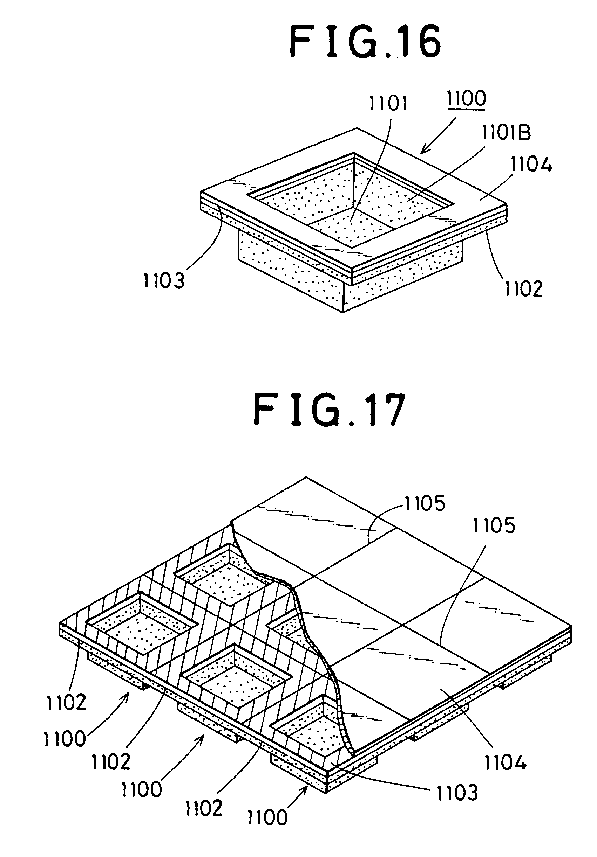

Figure 16 to Figure 19 relate to a eleventh embodiment of the present invention. Referring now to Fig. 16 to Fig. 19, a masking member 1100 comprises a body 1101 having a vessel form consisting of a square bottom 1101A , perpendicular walls 1101B which extend upwards from the perimeter of said bottom 1101A , a flange 1102 which is extended from the upper edges of said walls 1101B , and an adhesive layer 1103 formed on the surface of said flange 1102 , with said masking member 1100 manufactured by vacuum forming of a thermoplastic foam sheet. Said adhesive layer 1103 is covered with a release sheet 1104 .

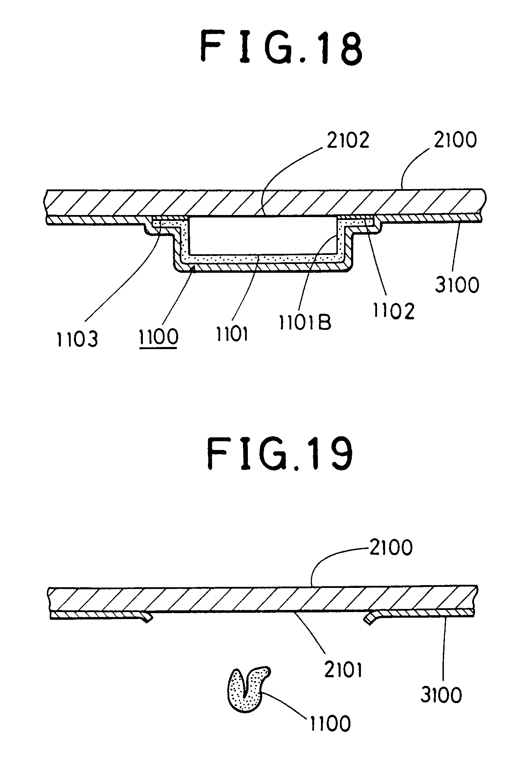

Said masking member 1100 may advantageously be produced by vacuum forming from a thermoplastic foam sheet such as a polystyrene paper (polystyrene foam sheet) and the like as shown in Fig. 17. Referring to Fig. 17, a number of masking members 1100 are formed and arranged in rows and lines, and each masking member 1100 is connected to the other masking member 1100 by the flange 1102 . Cutting lines 1105 or grooves are formed between said flange 1102 and another said flange 1102 and when said masking member 1100 is used, said masking member 1100 is broken along said cutting lines 1105 or grooves by hand. Said cutting lines 1105 or grooves may be formed on the surface or (and) the under surface of said flange 1102 . Referring to Fig. 18, when said masking member 1100 is used, said release sheet 1104 is removed from said adhesive layer 1103 and said masking member 1100 is then attached to an even part 2101 of the surface of a metal structure 2100 by said adhesive layer 1103 thereof. After said masking member 1100 is attached to said part 2101 , said coating is effected on the surface of said metal structure 2100 to form a visco-elastic layer 3100 . Said part 2101 of said surface of said metal structure 2100 is not subjected to said coating since said part 2101 is covered with said masking member 1100 . After said coating, said coated metal structure 2100 is heated to dry and/or cure if desired and in cases where the heating temperature is adequately higher than the softening point of the thermoplastic foam of said body 1101 of said masking member 1100 , said masking member 1100 will firstly expand and then shrink by said heating and come off by itself from said part 2101 of said surface of said metal structure 2100 as shown in Fig. 19. Said masking member 1100 is attached by only said adhesive layer 1103 on the surface of said flange 1102 thereof to said part 2101 of said metal structure 2100 , the removing of said masking member 1100 from said part 2101 of said metal structure 2100 may be very smooth without obstruction of said adhesive layer 1103 . Said masking member 1100 may also be removed by a hook and, in this case, said masking member 1100 may also be easily removed without obstruction of said adhesive layer 1103 .

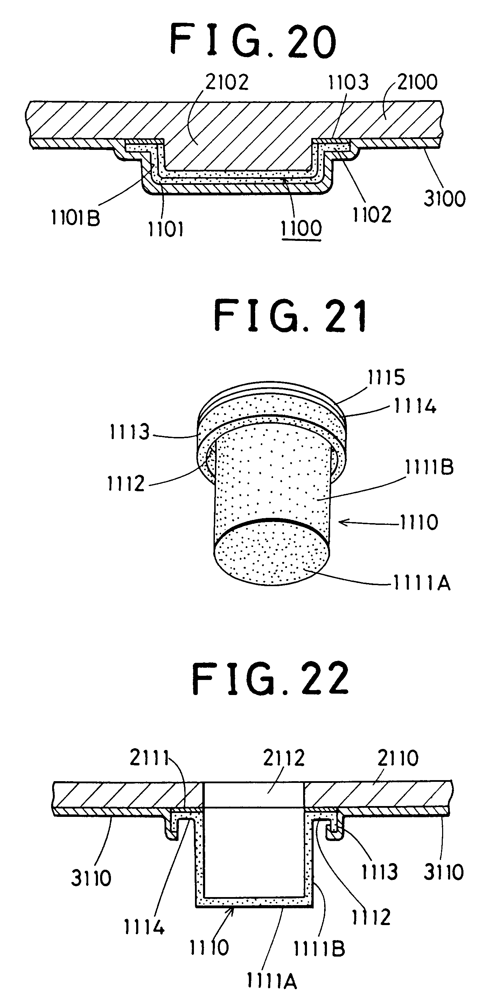

As shown in Figure 20, said masking member 1100 is also used to protect a protruding part 2102 of said metal structure 2100 by covering said protruding part 2102 with said masking member 1100 .

Figure 21 and Figure 22 relate to a twelfth embodiment of the present invention. In this embodiment, a masking member 1110 comprises a body 1111 having a vessel form consisting of a circular bottom 1111A , an inner perpendicular wall 1111B which extends upwards from the circumference of said bottom 1111A , a flange 1112 which is extended from the upper edge of said wall 1111B , and an outer perpendicular wall 1113 which extends downwards from the perimeter of said flange 1112 , and an adhesive layer 1114 formed on the surface of said flange 1112 , with said masking member 1110 manufactured by vacuum forming of a thermoplastic foam sheet the same as the prior embodiments of the present invention. Said adhesive layer 1114 is covered with a release sheet 1115 the same as the prior embodiments of the present invention.

When said masking member 1110 is used, said release sheet 1115 is removed from said adhesive layer 1114 and said masking member 1110 is then attached to an even part 2111 as shown in Fig. 22, of the surface of a metal structure 2110 by said adhesive layer 1114 thereof, and said part 2111 has a hole 2112 . After said masking member 1110 is attached to said part 2111 , a coating is effected on the surface of said metal structure 2110 to form a visco-elastic layer 3110 . Said part 2111 including said hole 2112 is not subjected to said coating since said part 2111 is covered with said masking member 1110 and said visco-elastic layer 3110 may be cut by said outer perpendicular wall 1113 of said flange 1112 of said masking member 1110 . After said coating, said coated metal structure 2110 is heated to dry and/or cure if desired and in cases where the heating temperature is adequately higher than the softening point of the thermoplastic foam sheet of said masking member 1110 , said masking member 1110 will firstly expand and then shrink by said heating and come off by itself from said part 2111 of said surface of said metal structure 2110 . Since said visco-elastic layer 3110 may be cut by said outer perpendicular wall 1113 of said flange 1112 of said masking member 1110 as shown in Fig. 22, and said masking member 1110 is also attached by only said adhesive layer 1114 on the surface of said flange 1112 thereof to said part 2111 of said metal structure 2110 the same as the eleventh embodiment of the present invention, the removing of said masking member 1110 from said part 2111 of said metal structure 2110 may be very smooth without obstruction of said visco-elastic layer 3110 and said adhesive layer 1114 of said masking member 1110 .

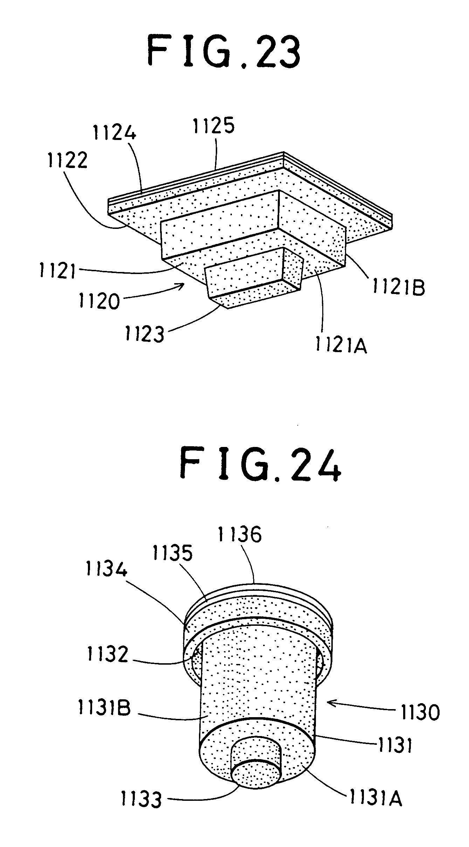

Figure 23 relates to a thirteenth embodiment of the present invention. In this embodiment, a masking member 1120 comprises a body 1121 having a vessel form consisting of a rectangular bottom 1121A from which a grip 1123 is risen, perpendicular walls 1121B which extend upwards from the perimeter of said bottom 1121A , a flange 1122 which is extended from the upper edges of said walls 1121B , and an adhesive layer 1124 formed on the surface of said flange 1122 , with said masking member 1120 manufactured by vacuum forming of a thermoplastic foam sheet the same as the prior embodiments of the present invention, and said adhesive layer 1124 is covered with a release sheet 1125 the same as the prior embodiments of the present invention. The masking member 1120 of this embodiment is easily handled by holding said grip 1123 of said masking member 1120 when said masking member 1120 is attached to a part of the surface of a metal structure which is to be protected from a coating and further, said masking member is easily removed by piercing said grip 1123 of said masking member 1120 with a hook.

Figure 24 relates to a fourteenth embodiment of the present invention. In this embodiment, a masking member 1130 comprises a body 1131 having a vessel form consisting of a circular bottom 1131A , from which a grip 1333 is risen, an inner perpendicular wall 1131B which extends upwards from the circumference of said bottom 1131A , a flange 1132 which is extended from the upper edge of said wall 1131B , an outer perpendicular wall 1134 which extends downwards from the perimeter of said flange 1132 , and an adhesive layer 1135 formed on the surface of said flange 1132 with said masking member 1130 manufactured by vacuum forming of a thermoplastic foam sheet the same as the prior embodiments of the present invention, and said adhesive layer 1135 is covered with a release sheet 1136 the same as in the prior embodiments of the present invention.

The masking member 1130 of this embodiment is easily handled by holding said grip 1133 of said masking member 1130 when said masking member 1130 is attached to a part of the surface of a metal structure which is to be protected from a coating and further, said masking member 1130 may be easily removed by piercing said grip 1133 of said masking member 1130 with a hook.

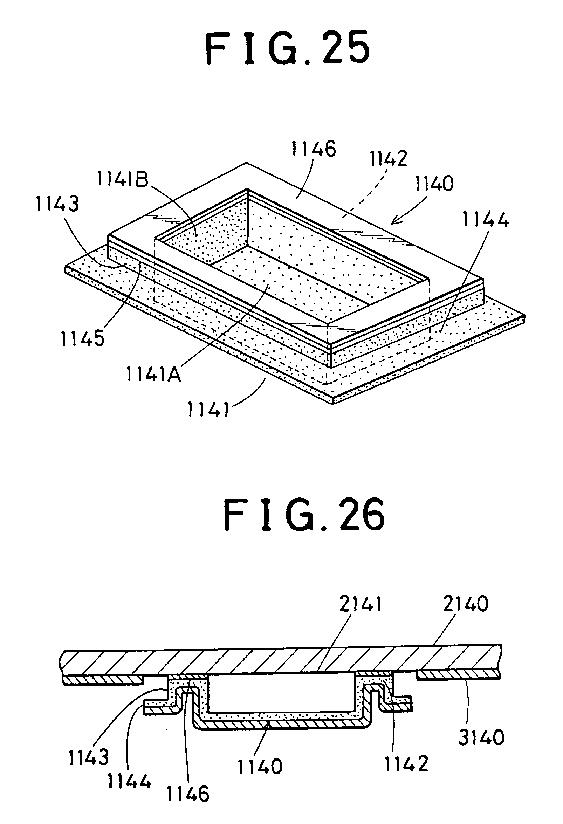

Figure 25 and Figure 26 relate to a fifteenth embodiment of the present invention. In this embodiment, a masking member 1140 comprises a body 1141 having a vessel form consisting of a rectangular bottom 1141A , inner perpendicular walls 1141B which extend upwards from the perimeter of said bottom 1141B, an upper flange 1142 which is extended from the upper edges of said walls 1141B , outer perpendicular walls 1143 which extend downwards from the perimeter of said upper flange 1142 , a lower flange 1144 which is extended from the lower edges of said outer walls 1143 , and an adhesive layer 1145 formed on the surface of said upper flange 1142 with said masking member 1140 manufactured by vacuum forming of a thermoplastic foam sheet the same as the prior embodiments of the present invention, and said adhesive layer 1145 is covered with a release sheet 1146 the same as the prior embodiments of the present invention.

The masking member 1140 may be attached to an even part 2141 of the surface of a metal structure 2140 which is to be protected from a coating, and a visco-elastic layer 3140 may be more completely cut by said lower flange 1144 of said masking member 1140 than in the cases of the twelfth and fourteenth embodiments of the present invention since said lower flange 1144 of said masking member 1140 covers and protects the perimeter of said part 2141 of the surface of said metal structure 2140 from said coating as shown in Fig. 26. Therefore, the removing of said masking member 1140 from said part 2141 may be more smooth than in the cases of the twelfth and fourteenth embodiments of the present invention.

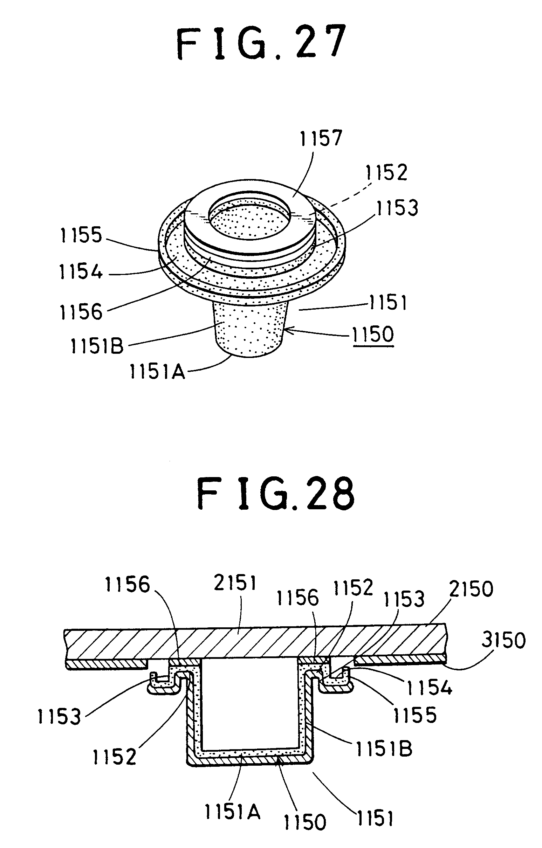

Figure 27 and Figure 28 relate to a sixteenth embodiment of the present invention. In this embodiment, a masking member 1150 comprises a body 1151 having a vessel form consisting of circular bottom 1151A , an inner perpendicular wall 1151B which extends upwards from the circumference of said bottom 1151A , an upper flange 1152 which is extended from the upper edge of said wall 1151B , a middle perpendicular wall 1153 which extends downwards from the circumference of said flange 1152 , a lower flange 1154 which is extended from the lower edge of said middle perpendicular wall 1153 , an outer perpendicular wall 1155 which extends upwards from the circumference of said flange 1154 , and an adhesive layer 1156 formed on the surface of said upper flange 1152 with said masking member 1150 manufactured by vacuum forming of a thermoplastic foam sheet the same as the prior embodiments of the present invention, and said adhesive layer 1156 is covered with a release sheet 1157 the same as the prior embodiments of the present invention.

The masking member 1150 may be attached to an even part 2151 in the surface of a metal structure 2150 which is to be protected from a coating, and a visco-elastic layer 3150 may be still more completely cut by said lower flange 1154 and said outer perpendicular wall 1155 than in the case of the fifteenth embodiment of the present invention since the circumference of said part 2151 may be covered with both said lower flange 1154 and said outer perpendicular wall 1155 to protect said circumference of said part 2151 from said coating as shown in Fig. 28. Therefore, the removing of said masking member 1150 from said part 2151 may be more smooth than in the cases of the prior embodiments of the present invention.

### [Masking member C]

Masking member C is used to protect the hole of the metal structure.

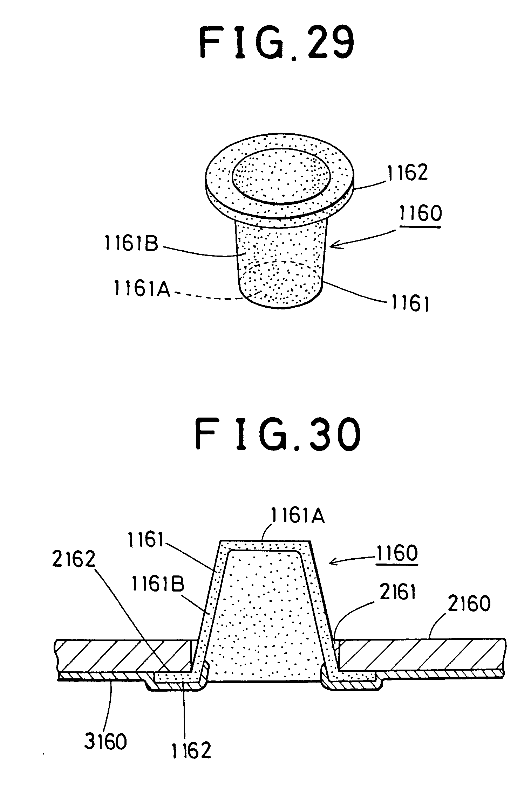

Figure 29 to Figure 31 relate to the seventeenth embodiment of the present invention. Referring now to said figures, a masking member 1160 consists of an inserting part 1161 having a vessel form consisting of a circular bottom 1161A and a perpendicular wall 1161B which extends upwards from the circumference of said bottom 1161A , and a flange 1162 which is extended from the upper edge of said wall 1161B , said masking member 1160 manufactured by vacuum forming of a thermoplastic foam sheet. Said inserting part 1161 has a taper form decreasing in diameter from the base of said inserting part 1161 to the top of said inserting part 1160 .

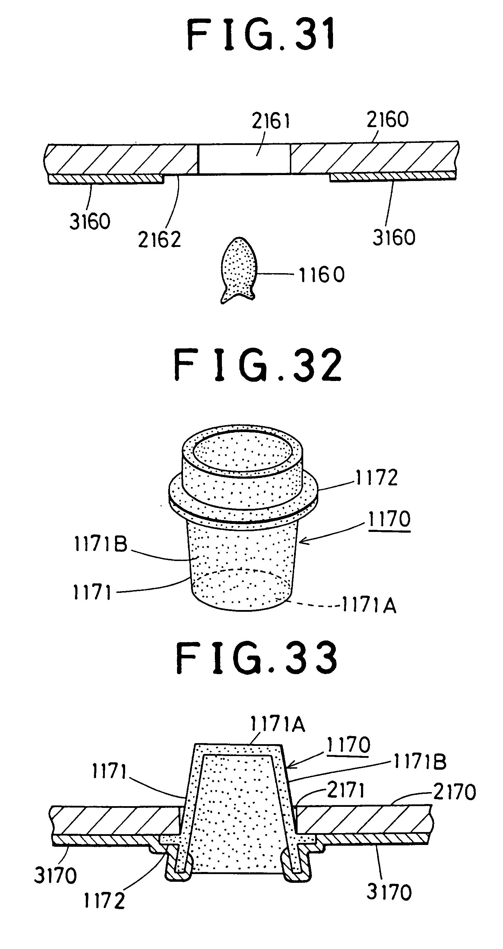

When said masking member 1160 is used, said masking member 1160 protects the inside of a hole 2161 of a metal structure 2160 by inserting said inserting part 1161 into said hole 2161 as shown in Fig. 30, and said flange 1162 of said masking member 1160 covers the surroundings 2162 of said hole 2161 . After which, a coating is effected on the surface of said metal structure 2160 to form a visco-elastic layer 3160 and the inside and surroundings of said hole 2161 are not subjected to said coating. After said coating, said masking member 1160 may be removed from said hole 2161 by hand, hook, and the like. Said masking member 1160 can be also removed from said hole 2161 by heating at a temperature higher than the softening point of said thermoplastic foam sheet. When said masking member 1160 is heated to a temperature higher than the softening point of the thermoplastic foam of said masking member, it may be softened and gases such as air, gas of a blowing agent, and the like in the cells of said thermoplastic foam may firstly expand and so said masking member may also expand and, then, when said gases leave the cells, said masking member 1160 may shrink rapidly and remove itself naturally from said hole 2161 as shown in Figure 31. After said masking member 1160 is removed from said hole 2161 , said visco-elastic layer 3160 has not been formed inside and on said surrounding 2162 of said hole 2161 as shown in Fig. 31. Further, said masking member 1160 can be used for many holes having different diameters since said inserting part 1161 of said masking member 1160 has a taper form as before mentioned.

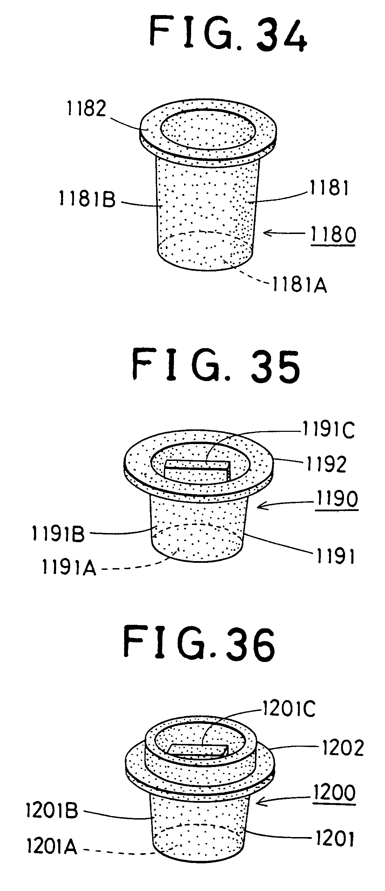

Figure 32 and Figure 33 relate to the eighteenth embodiment of the present invention. In this embodiment, a masking member 1170 consists of an inserting part 1171 having a vessel form consisting of a circular bottom 1171A and a perpendicular wall 1171B which extends upwards from the circumference of said bottom 1171A and a flange 1172 which is extended from the upper part of said wall 1171B . Said inserting part 1171 has a taper form decreasing in diameter from the base of said inserting part 1171 to the top of said inserting part 1171 . Said masking member 1170 is manufactured by vacuum forming of a thermoplastic foam sheet.

Said masking member 1170 of this embodiment is used as same as the seventeenth embodiment and a visco-elastic layer 3170 may be cut by the upper edge of said inserting part 1171 as shown in Figure 33, and therefore, said masking member 1170 may be smoothly removed from the hole 2171 of the metal structure 2170 without the obstruction of said visco-elastic layer 3170 .

Figure 34 relates to the nineteenth embodiment of the present invention. In this embodiment, a masking member 1180 consists of an inserting part 1181 having a vessel form consisting of a circular bottom 1181A and a perpendicular wall 1181B , and a flange 1182 which is extended from the upper edge of said wall 1181B . The width of said flange 1182 is smaller than the width of the flange 1162 of the masking member 1160 of the seventeenth embodiment and said flange 1182 having small width acts as a stopper of the masking member 1180 when said masking member 1180 is inserted into the hole.

Figure 35 relates to the twentieth embodiment of the present invention. In this embodiment, a masking member 1190 comprises an inserting part 1191 having a vessel form consisting of a circular bottom 1191A from which a grip 1191C is risen, and perpendicular wall 1191B which extends upwards from the circumference of said bottom 1191A , and a flange 1192 which is extended from the upper edge of said wall 1191B . Said inserting part 1191 has a taper form decreasing in diameter from the base of said inserting part 1191 to the top of said inserting part 1191 . Said masking member 1190 is manufactured by vacuum forming of a thermoplastic foam sheet. The masking member 1190 of this embodiment is easily handled by holding said grip 1191C when said masking member 1190 is inserted into the hole of the metal structure or removed from the hole.

Figure 36 relates to the twenty-first embodiment of the present invention. In this embodiment, a masking member 1200 consists of a inserting part 1201 having a vessel form consisting of a circular bottom 1201A from which a grip 1201C is risen and a perpendicular wall 1201B which extends upwards from the circumference of said bottom 1201A and a flange 1202 which is extended from the upper part of said wall 1201B . Said inserting part 1201 has a taper form decreasing in diameter from the base of said inserting part 1201 to the top of said inserting part 1201 . Said masking member 1200 is manufactured by vacuum forming of a thermoplastic foam sheet. Said masking member 1200 of this embodiment is easily handled by holding said grip 1201C when the masking member 1200 is inserted into the hole of the metal structure or removed from the hole as same as the twentieth embodiment of the present invention. Further, the visco-elastic layer coated on the metal structure may be cut by the upper edge of said inserting part 1201 as same as the eighteenth embodiment so that said masking member 1200 is easily removed from the hole without the obstruction of said visco-elastic layer.

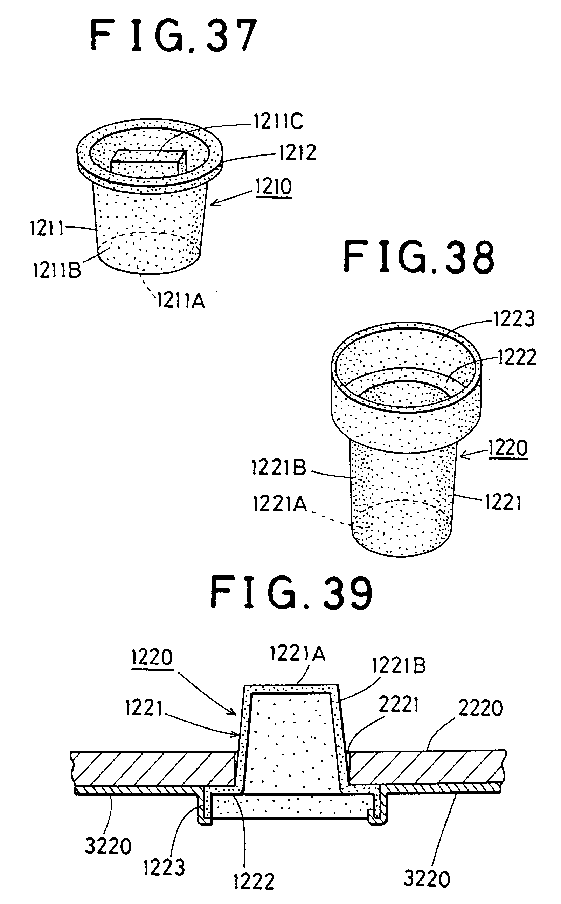

Figure 37 relates to the twenty-second embodiment of the present invention. In this embodiment, a masking member 1210 comprises an inserting part 1211 having a vessel form consisting of a circular bottom 1211A from which a grip 1211C is risen, a perpendicular wall 1211B which extends upwards from the circumference of said bottom 1211A , and a flange 1212 which is extended from the upper edge of said wall 1211B . Said inserting part 1211 has a taper form decreasing in diameter from base of said inserting part 1211 to the top of said inserting part 1211 and the width of said flange 1212 is smaller than the width of the flange 1192 of the masking member 1190 of the twentieth embodiment and said flange 1212 having small width acts as a stopper of the masking member 1210 when said masking member 1210 is inserted into hole.

Figure 38 and Figure 39 relate to the twenty-third embodiment of the present invention. In this embodiment, a masking member 1220 consists of an inserting part 1221 having a vessel form consisting of a circular bottom 1221A and a perpendicular wall 1221B which extends upwards from the circumference of said bottom 1221A , and a flange 1222 which is extended from the upper edge of said wall 1221B , and has a perpendicular wall 1223 which extends upwards from the circumference of said flange 1222 . Said inserting part 1221 has a taper form decreasing in diameter from the base of said inserting part 1221 to the top of said inserting part 1221 . Said masking member 1220 is manufactured by vacuum forming of thermoplastic foam sheet.

Said masking member 1220 of this embodiment is used as same as the seventeenth embodiment, and in this embodiment the visco-elastic layer 3220 may be cut by the edge of said perpendicular wall 1221B as shown in Figure 39, so that said masking member 1220 is easily removed from the hole 2221 of the metal structure 2220 without obstruction of said visco-elastic layer 3220 .

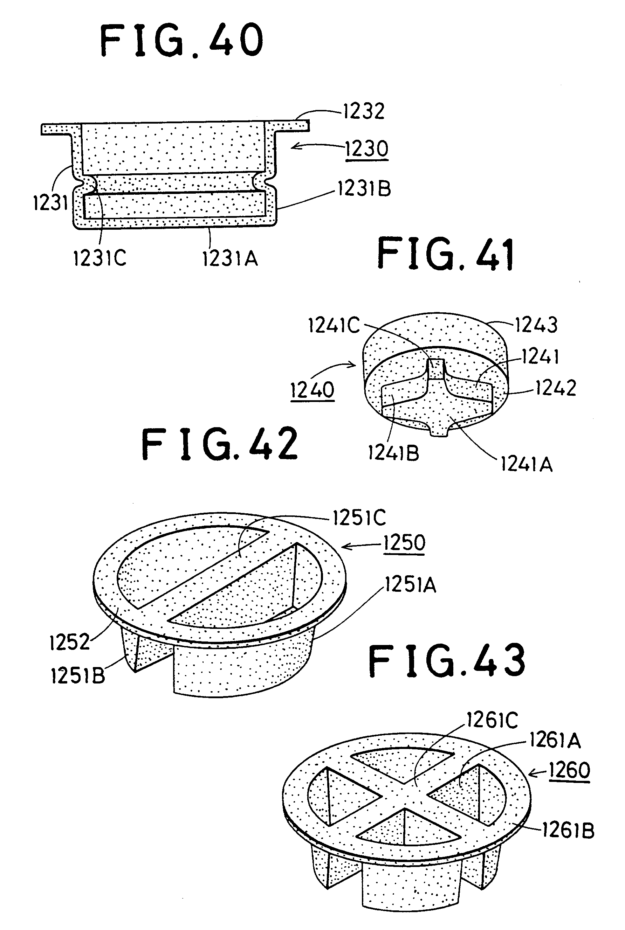

Figure 40 relates to the twenty-fourth embodiment of the present invention. In this embodiment, a masking member 1230 consists of an inserting part 1231 having a vessel form consisting of a circular bottom 1231A and a perpendicular wall 1231B in the middle part of which a horizontal rib 1231C is formed, and a flange 1232 which is extended from the upper edge of said wall 1231B .

Said masking member 1230 of this embodiment is used as same as the seventeenth embodiment and said horizontal rib 1231C reinforces said wall 1231B of said inserting part 1231 of said masking member 1230 so that said masking member 1230 is firmly inserted into the hole of the metal structure.

Figure 41 relates to the twenty-fifth embodiment of the present invention. In this embodiment, a masking member 1240 consists of an inserting part 1241 having vessel form consisting of a cross-shaped bottom 1241A and a perpendicular wall 1241B which extends upwards from the perimeter of said bottom 1241A , a flange 1242 which is extended from the upper edge of said wall 1241B , and a perpendicular wall 1243 which extends upwards from the circumference of said flange 1242 . Said masking member 1240 is manufactured by vacuum forming of thermoplastic foam sheet. In this embodiment, said inserting part 1241 is reinforced by said cross-shaped bottom 1241A to prevent crushing of said inserting part 1241 of said masking member when said masking member 1240 is inserted into the hole of the metal structure, and further said masking member 1240 is supported in the inner wall of said hole by only partially contacts at the tips 1241C of said inserting part 1241 so that removing of said masking member 1240 from the hole may be very easy.

Figure 42 relates to the twenty-sixth embodiment of the present invention. In this embodiment, a masking member 1250 consists of an inserting part 1251 which has a vessel form and is divided into two crescent parts 1251A and 1251B by a grip 1251C which is risen from the bottom of said inserting part 1251 , and a flange 1252 which is extended from the upper edge of said inserting part 1251 .

Said masking member 1250 of this embodiment is easily manufactured by vacuum molding and easily removed from the hole since said masking member 1250 partially contacts with the inner wall of the hole, since said inserting part 1251 is divided into two crescent parts 1251A and 1251B by said grip(1251C).

Figure 43 relates to the twenty-seventh embodiment of the present invention. In this embodiment, a masking member 1260 consists of an inserting part 1261 which has a vessel form and is divided into four parts 1261A , 1261B , 1261C and 1261D by a cross-shaped grip 1261E which is risen from the bottom of said inserting part 1261 , and a flange 1262 which is extended from the upper edge of said inserting part 1261 .

Said masking member 1260 of this embodiment is used the same as the twenty-sixth embodiment and easier removed from the hole since the contacting area of said masking member 1260 with the inner wall of the hole is smaller than the case of the twenty-sixth embodiment so that said inserting part 1261 is divided into four parts 1261A , 1261B , 1261C , and 1261D by said cross-shaped grip 1261E and the thermoplastic foam sheet is saved in this embodiment comprising the masking member having the cylindrical inserting part.

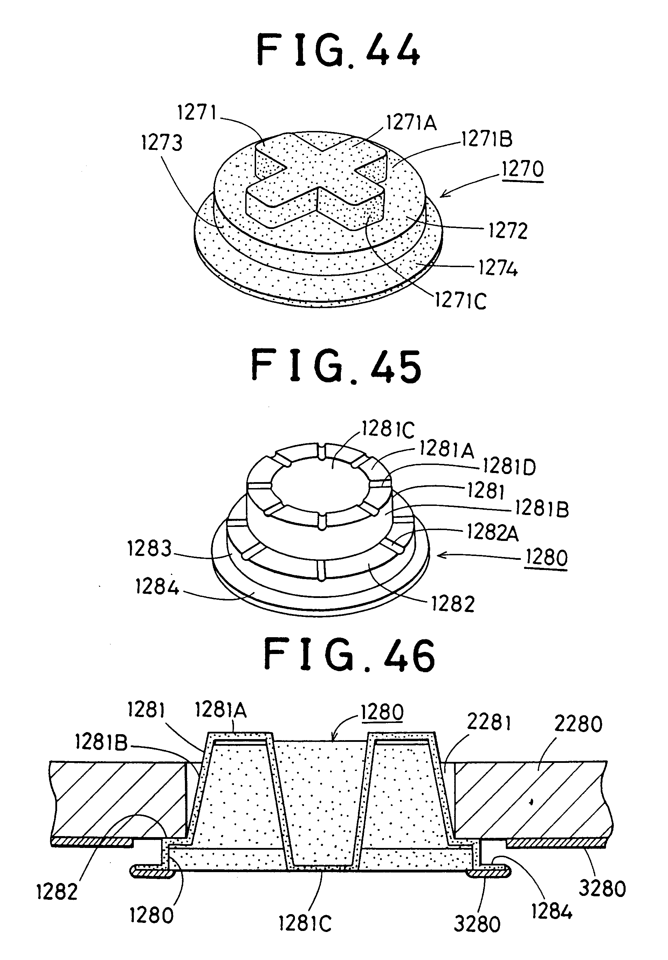

Figure 44 relates to the twenty-eighth embodiment of the present invention. In this embodiment, a masking member 1270 consists of an inserting part 1271 having vessel form consisting of a cross-shaped bottom 1271A and a perpendicular wall 1271B which extends upwards from the perimeter of said bottom 1271A , a lower flange 1272 which is extended from the upper edge of said wall 1271B , a perpendicular wall 1273 which extends upwards from the circumference of said lower flange 1272 , and an upper flange 1274 which is extended from the upper edge of said wall 1273 . Said masking member 1270 is manufactured by vacuum forming of thermoplastic foam sheet.

In this embodiment, said inserting part 1271 is reinforced by said cross-shaped bottom 1271A to prevent crushing of said inserting part 1271 of said masking member when said masking member 1270 is inserted into the hole of the article, and further said masking member 1270 is supported in the inner wall of said hole by only partially contacts at the tips 1271C of said inserting part 1271 so that removing of said masking member 1270 from the hole may be very easy. The film of the surface treatment may be more completely cut by said upper flange 1274 with said lower flange 1272 and said perpendicular wall 1273 than in the case of the twenty-fifth embodiment of the present invention.

Figure 45 and Figure 46 relate to the twenty-ninth embodiment of the present invention. In this embodiment, a masking member 1280 consists of an inserting part 1281 having vessel form consisting of a circular bottom 1281A from which a grip 1281C is risen and an inner perpendicular wall 1281B which extends upwards from the circumference of said bottom 1281A , a lower flange 1282 which is extended from the upper part of said wall 1281B , an outer perpendicular wall 1283 which extends upwards from the circumference of said lower flange 1282 , and an upper flange 1284 which is extended from the upper part of said wall 1283 , and plural radiated ribs 1281D and 1282A are respectively formed in said lower flange 1282 and said upper flange 1284 . Said inserting part 1281 has a taper form decreasing in diameter from the base to the top of said inserting part 1281 . Said masking member 1280 is manufactured by vacuum-forming of a thermoplastic foam sheet.

As shown in Figure 46, said masking member 1280 is inserted a hole 2281 of a metal structure 2280 the same as the twentieth embodiment and since a visco-elastic layer 3280 may be cut by said upper flange 1284 of said masking member 1280 , the removing of said masking member 1280 from said hole 2281 may be very smooth without obstruction of said visco-elastic layer 3280 and further said ribs 1281D and 1282A respectively reinforce said lower and upper flanges 1282 and 1284 .

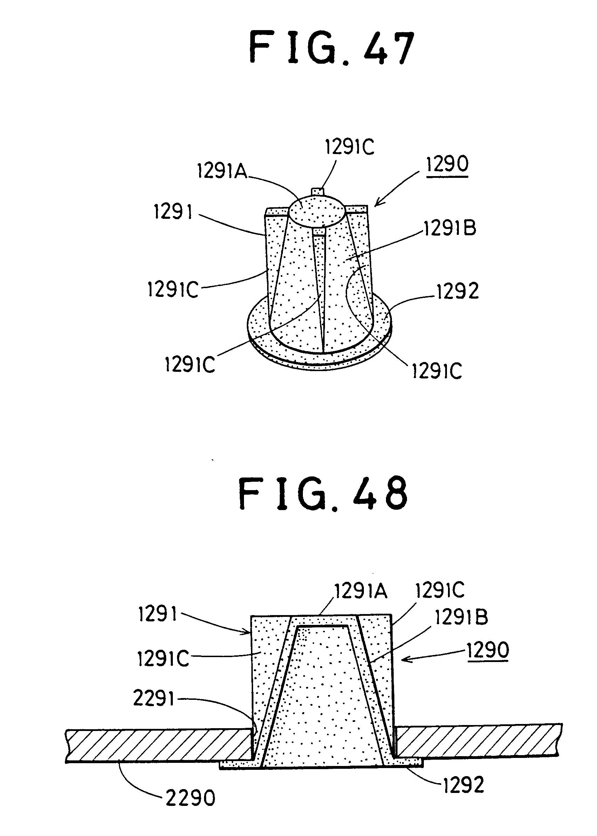

Figure 47 and Figure 48 relate to the thirtieth embodiment of the present invention. In this embodiment a masking member 1290 consists of an inserting part 1291 having a vessel form consisting of a circular bottom 1291A and a perpendicular wall 1291B which extends upwards from the circumference of said bottom 1291A and on which plural perpendicular ribs 1291C are formed, and a flange 1292 which is extended from the upper edge of said wall 1291B . Said inserting part 1291 has a taper form decreasing in diameter from the base to the top of said inserting part 1291 . Said masking member is manufactured by vacuum forming of a thermoplastic foam sheet. In this embodiment, said perpendicular ribs 1291C reinforce said perpendicular wall 1291B to prevent crushing of said inserting part 1291 of said masking member 1290 when said masking member 1290 is inserted into a hole 2291 of a metal structure 2290 as shown in Figure 48 and said masking member 1290 is firmly held in said hole 2291 since said perpendicular ribs 1290C of said masking member 1290 tightly contact to the inner wall of said hole.

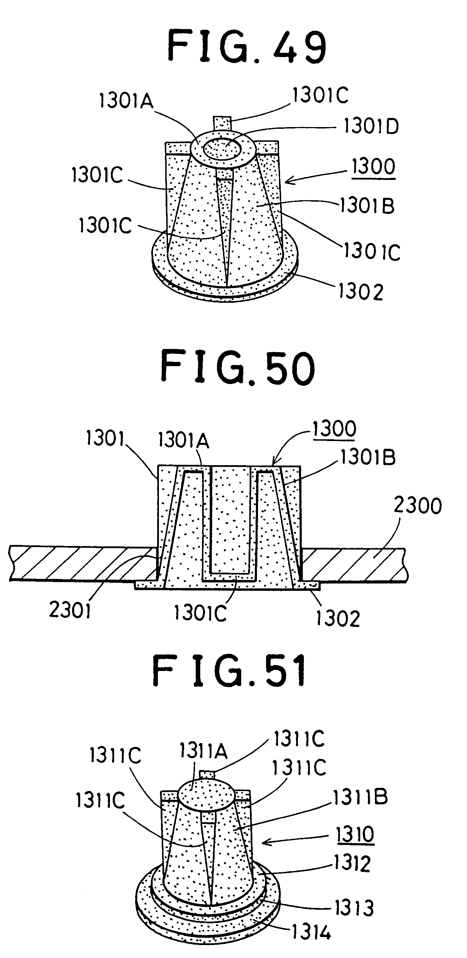

Figure 49 and Figure 50 relate to the thirty-first embodiment of the present invention. In this embodiment, a masking member 1300 consists of an inserting part 1301 having a vessel form consisting of a circular bottom 1301A from which a grip 1301D is risen and a perpendicular wall 1301B which extends upwards from the circumference of said bottom 1301A and on which plural perpendicular ribs 1301C are formed, and a flange 1302 which is extended from the upper edge of said wall 1301B . Said inserting part 1301 has a taper form decreasing in diameter from the base to the top of said inserting part 1301 . Said masking member 1300 is manufactured by vacuum forming of a thermoplastic foam sheet. In this embodiment, said perpendicular ribs 1301C reinforce said perpendicular wall 1301B to prevent crushing of said inserting part 1301 of said masking member 1300 when said masking member 1300 is inserted into a hole 2301 of a metal structure 2300 as shown in Figure 50 and said masking member 1300 is firmly held in said hole 2301 since said perpendicular ribs 1301C of said masking member 1300 tightly contact to the inner wall of said hole 2301 . Further, said masking member 1300 of this embodiment is easily handled by holding said grip 1301D when said masking member 1300 is inserted into said hole 2301 .

Figure 51 relates to the thirty-second embodiment of the present invention. In this embodiment, a masking member 1310 consists of an inserting part 1311 having a vessel form consisting of a circular bottom 1311A from which a grip 1311D is risen and a perpendicular wall 1311B which extends upwards from the circumference of said bottom 1311A and on which plural perpendicular ribs 1311C are formed, a lower flange 1312 which is extended from the upper edge of said wall 1311B , a perpendicular wall 1313 which extends upwards from the circumference of said flange 1312 , and an upper flange 1314 which is extended from the upper edge of said perpendicular wall 1313 . Said inserting part 1311 has a taper form decreasing in diameter from the base of said inserting part 1311 to the top of said inserting part 1311 . Said masking member is manufactured by vacuum forming of a thermoplastic foam sheet.

In this embodiment, said perpendicular ribs 1311C reinforce said perpendicular wall 1311B to prevent crushing of said inserting part 1311 of said masking member 1310 when said masking member 1310 is inserted into the hole 2311 of the metal structure 2310 and said masking member 1310 is firmly held in the hole since said perpendicular ribs 1311C of said masking member 1310 tightly contact to the inner wall of said hole. Further, said masking member 1310 of this embodiment is easily handled by holding said grip 1311D when said masking member 1310 is inserted into the hole as same as the thirty-second embodiment and the visco-elastic layer may be more completely cut by said upper flange 1314 with said lower flange 1312 and said perpendicular wall 1313 than in the case of the thirtieth and thirty-first embodiments of the present invention so that said masking member 1310 is more easily removed from the hole without the obstruction of the visco-elastic layer.

### [Masking member D]

Masking member D is used to protect the extending part of the metal structure.

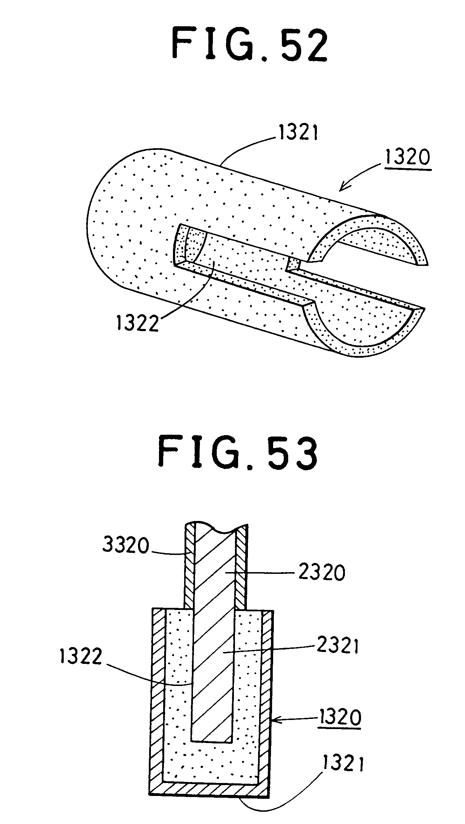

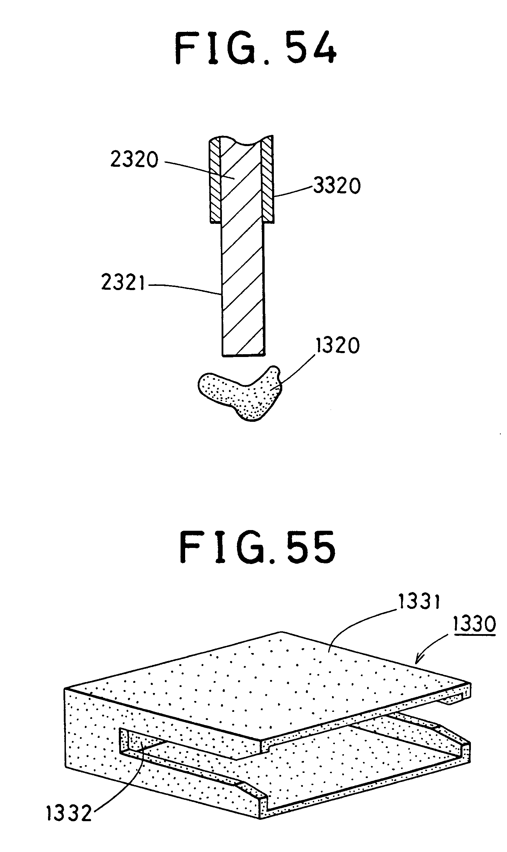

Figure 52 to Figure 54 relate to the thirty-third embodiment of the present invention. In this embodiment, a masking member 1320 consists of a body 1321 having a cylindrical vessel form, which has a slit 1322 formed from the opening end of said body 1321 . An extending part 2321 of the metal structure 2320 to be protected is inserted into said slit 1322 of said masking member 1320 and the visco-elastic layer 3320 is not formed on said extending part 2321 since said extending part 2321 is protected by said masking member 1320 as shown in Figure 53. After coating of the visco-elastic material, said masking member is removed by heating as shown in Figure 54 or by hook without or before heating.

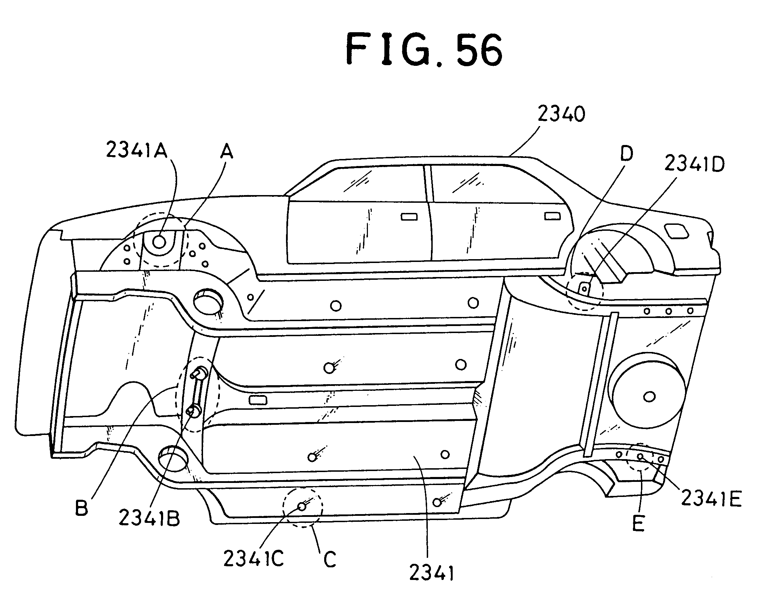

Figure 55 relates to the thirty-fourth embodiment of the present invention. In this embodiment, a masking member 1330 consists of a body 1331 having a square vessel form and a slit 1332 which is formed from the opening end of said body 1331 . Said masking member is used the same as the thirty-third embodiment.

### [Application of the present invention to the under side of the car body]

Figure 56 to Figure 61 relate to an applied embodiment in which the present invention is applied to the under side of the car body.

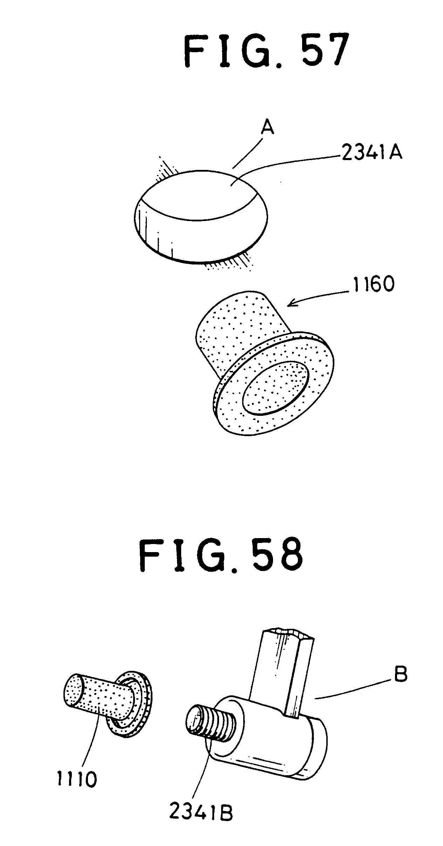

As shown in Fig. 56, the masking members of the present invention are attached to parts A, B, C, D and E of the under side 2341 of a car body 2340 . Namely, as shown in Figure 57, the masking member C, such as said masking member 1160 of Figure 29 of the seventeenth embodiment may be attached to a hole 2341A of part A into which a spring axis of a forward wheel is inserted and the circumference of the hole 2341A is used as a bed for the spring. Therefore, the inside of the hole 2341A is covered with the inserting part 1161 of the masking member 1160 and the circumference of the hole 2341 is covered with the flange 1162 of the masking member 1160 to protect these from the coating of visco-elastic material.

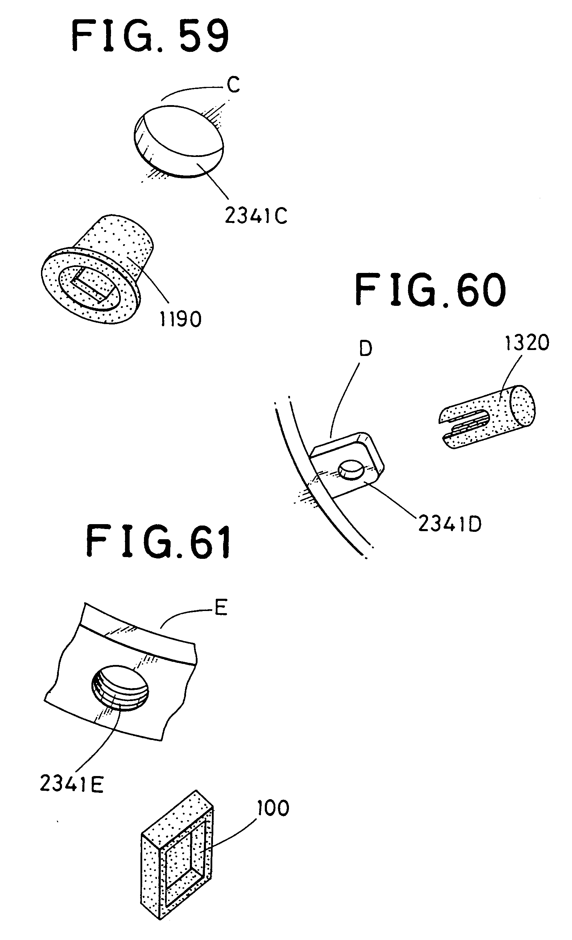

As shown in Figure 58, the masking member B, such as said masking member 1110 of the twelfth embodiment is attached to a bolt 2341B of part B which is used to attach a part to the underside 2341 of the car body 2340 .

As shown in Figure 59, the masking member 1190 of the twentieth embodiment is inserted into a drainage hole 2341C , as shown in Figure 60, the masking member D, such as the masking member 1320 of the thirty-third embodiment is attached to a bracket 2341D of part D which is used to attach a part to the under side 2341 of the car body 2340 , and as shown in Figure 61, the masking member 100 of the first embodiment is attached to a screw hole 2341E which is used to attach a part to the under side 2341 of the car body 2340 . Thus, said hole 2341A , said bolt 2341B , said drainage hole 2341C , said bracket 2341D and said screw hole 2341E are protected by said masking members of the present invention from the coating of visco-elastic material.

## Claims

1. A method for making metal structures (200; 2100; 2110; 2160; 2320) corrosion, sound, and vibration-proof which comprises the following steps:
a) masking the necessary parts (201; 2102; 2112; 2161; 2321) of the surface of said metal structures (200; 2100; 2110; 2160; 2320) with masking members (100; 1100; 1110; 1160; 1320),
b) performing a surface treatment, and
c) removing said masking members (100; 1100; 1110; 1160; 1320) from said surface of said metal structures (200; 2100; 2110; 2160; 2320),
characterized in that
d) said masking members (100; 1100; 1110; 1160; 1320) are manufactured by vacuum forming of a thermoplastic foam sheet, and
e) the surface treatment is a coating of a visco-elastic material (300; 3100; 3110; 3160; 3320) on the surface of said metal structure (200; 2100; 2110; 2160; 2320).

2. The method according to Claim 1, wherein the even surfaces (201) of said metal structure (200; 2100; 2110; 2160; 2320) are protected by the masking member A (100) or B (1100), the protruding parts (2102) of said metal structure (200; 2100; 2110; 2160; 2320) are protected by the masking members B (1100), the holes (2112; 2161) of said metal structure (200; 2100; 2110; 2160; 2320) are protected by the masking member C (1110; 1160), and the extending parts (2321) of said metal structure (200; 2100; 2110; 2160; 2320) are protected by the masking members D (1320), wherein said masking member A (100) comprises a body (101) having vessel form consisting of a bottom (101A) and perpendicular wall(s) (101B) which extend(s) upwards from the perimeter of said bottom (101A), and an adhesive layer (102) formed on the under surface of said body (101), said masking member B (1100) comprises a body (1101) having vessel form consisting of a bottom (1101A), perpendicular wall(s) (1101B) which extend(s) upwards from the perimeter of said bottom (1100A) and a flange (1102) which is extended from the upper edge(s) of said wall(s) (1101B), and an adhesive layer (1103) formed on the surface of said flange (1102), said masking member C (1110; 1160) consists of an inserting part or a protruding part having a vessel form consisting of a bottom (1111A; 1161A) and perpendicular wall(s) (1111B; 1161B) which extend(s) upwards from the circumference of said bottom (1111A; 1161A), and said masking member D (1320) consists of a body (1321) having a vessel form which has a slit (1322) formed from the opening end of said body (1321).

3. The method according to Claim 2, wherein said masking members A (100) are attached to the even surfaces (201) of said metal structures (200; 2100; 2110; 2160; 2320) by said adhesive layer (102), said masking members B (1100) are attached to the even surfaces (2101) or cover the protruding parts (2102) of said metal structures (200; 2100; 2110; 2160; 2320) by said adhesive layers (1103), said masking members C (1110; 1160) are attached to the holes (2112; 2161) of said metal structures (200; 2100; 2110; 2160; 2320) by inserting said inserting parts of said masking members C (1160) into or by attaching said protruding parts of said masking members C (1110) onto said holes (2112; 2161), and said masking members D (1320) are attached to the extending parts (2321) of said metal structures (200; 2100; 2110; 2160; 2320) by inserting said extending parts (2321) into said slit (1322) of said masking members D (1320).

4. The method according to Claims 1, 2 and 3, wherein said masking members (100; 1100; 1110; 1160; 1320) are manufactured by vacuum forming of a thermoplastic foam sheet laminated by a thermoplastic film on one or both sides of said thermoplastic foam sheet.

5. The method according to Claims 1, 2, 3 and 4, wherein said masking members (100; 1100; 1110; 1160; 1320) are manufactured by vacuum forming of a polystyrene foam sheet.

6. The method according to Claims 1, 2, 3, 4 and 5 wherein said metal structures (200; 2100; 2110; 2160; 2320) are previously subjected to treatment consisting of cleaning, electro-deposition coating, and anti-corrosion coating.

7. The method according to Claims 1, 2, 3, 4 and 5 wherein said metal structures (200; 2100; 2110; 2160; 2320) are previously subjected to cleaning, electro-deposition coating, middle coating, and anti-corrosion coating.

8. The method according to Claims 1, 2, 3, 4 and 5 wherein said metal structures (200; 2100; 2110; 2160; 2320) are previously subjected to cleaning, electro-deposition coating, middle coating, top coating and anti-corrosion coating.

9. The method according to Claims 1,2, 3, 4, 5, 6, 7 and 8 wherein said visco-elastic layer (300; 3100; 3110; 3160; 3320) is plasticized polyvinyl chloride.

10. The method according to Claims 1, 2, 3, 4, 5, 6, 7, 8 and 9, wherein said metal structures (200; 2100; 2110; 2160; 2320) are the under sides (2341) of car bodies (2340).

11. A metal structure treated by the method according to Claim 1, 2, 3, 4, 5, 6, 7, 8 and 9.

12. A metal structure according to Claim 11, wherein said metal structure (200; 2100; 2110; 2160; 2320) is the under side (2341) of a car body (2340).

## Patentansprüche

1. Verfahren, um Metallstrukturen (200, 2100, 2110, 2160, 2320) korrosionsbeständig, schalldicht und erschütterungssicher zu machen, mit den folgenden Schritten:
a) Abdecken der zu schützenden Oberflächenteile (201, 2102, 2112, 2161, 2321) der Metallstrukturen (200, 2100, 2110, 2160, 2320) mit Abdeckelementen (100, 1100, 1110, 1160, 1320);
b) Ausführen einer Oberflächenbehandlung; und
c) Entfernen der Abdeckelemente (100, 1100, 1110, 1160, 1320) von der Oberfläche der Metallstrukturen (200, 2100, 2110, 2160, 2320),
dadurch gekennzeichnet, daß
d) die Abdeckelemente (100, 1100, 1110, 1160, 1320) durch Vakuumformen aus einer thermoplastischen Schaumstofftafel hergestellt werden; und
e) die Oberflächenbehandlung im Auftragen eines viskoelastischen Materials (300, 3100, 3110, 3160, 3320) auf die Metallstruktur (200, 2100, 2110, 2160, 2320) besteht.

2. Verfahren nach Anspruch 1, wobei die ebenen Oberflächen (201) der Metallstruktur (200, 2100, 2110, 2160, 2320) durch die Abdeckelemente A (100) oder B (1100), die vorstehenden Teile (2102) der Metallstruktur (200, 2100, 2110, 2160, 2320) durch die Abdeckelemente B (1100), die Öffnungen (2112, 2161) der Metallstruktur (200, 2100, 2110, 2160, 2320) durch die Abdeckelemente C (1110, 1160) und die vorstehenden Teile (2321) der Metallstruktur (200, 2100, 2110, 2160, 2320) durch die Abdeckelemente D (1320) geschützt werden, wobei das Abdeckelement A (100) einen behälterförmigen Körper (101), der aus einem Boden (101A) und einer (mehreren) senkrechten Wand (Wänden) (101B) besteht, die sich vom Umfang des Bodens (101A) nach oben erstreckt (erstrecken), und eine an der Unterseite des Körpers (101) ausgebildete Haftschicht (102) aufweist; das Abdeckelement B (1100) einen behälterförmigen Körper (1101), der aus einem Boden (1101A) und einer (mehreren) senkrechten Wand (Wänden) (1101B) besteht, die sich vom Umfang des Bodens (1101A) nach oben erstreckt (erstrecken), einen von der (den) Oberkante(n) der Wand (Wände) (1101B) ausgehenden Flansch (1102) und eine an der Oberfläche des Flansches (1102) ausgebildete Haftschicht (1103) aufweist; das Abdeckelement C (1110, 1160) aus einem behälterförmigen Einsteckteil (oder vorstehenden Teil) besteht, das aus einem Boden (1111A, 1161A) und einer (mehreren) senkrechten Wand (Wänden) (1111B, 1161B) besteht, die sich vom Umfang des Bodens (1111A, 1161A) nach oben erstreckt (erstrecken), und das Abdeckelement D (1320) aus einem behälterförmigen Körper (1321) besteht, an dessen offenem Ende ein Schlitz (1322) ausgebildet ist.

3. Verfahren nach Anspruch 2, wobei die Abdeckelemente A (100) durch die Haftschicht (102) an den ebenen Flächen (201) der Metallstrukturen (200, 2100, 2110, 2160, 2320) angebracht werden, die Abdeckelemente B (1100) durch die Haftschicht (1103) an den ebenen Flächen (2101) befestigt werden oder die vorstehenden Teile (2102) der Metallstrukturen (200, 2100, 2110, 2160, 2320) bedecken, die Abdeckelemente C (1110, 1160) an den Öffnungen (2112, 2161) der Metallstrukturen (200, 2100, 2110, 2160, 2320) befestigt werden, indem die Einsteckteile der Abdeckelemente C (1160) in die Öffnungen (2112, 2161) eingesetzt oder die vorstehenden Teile der Abdeckelemente C (1110) auf den Öffnungen (2112, 2161) angebracht werden, und die Abdeckelemente D (1320) an den vorstehenden Teilen (2321) der Metallstrukturen (200, 2100, 2110, 2160, 2320) befestigt werden, indem die vorstehenden Teile (2321) in den Schlitz (1322) der Abdeckelemente D (1320) eingesetzt werden.

4. Verfahren nach Anspruch 1, 2 und 3, wobei die Abdeckelemente (100, 1100, 1110, 1160, 1320) durch Vakuumformen aus einer thermoplastischen Schaumstofftafel hergestellt werden, die auf einer oder beiden Seiten mit einer thermoplastischen Folie laminiert ist.

5. Verfahren nach Anspruch 1, 2, 3 und 4, wobei die Abdeckelemente (100, 1100, 1110, 1160, 1320) durch Vakuumformen aus einer Polystyrol-Schaumstofftafel hergestellt werden.

6. Verfahren nach Anspruch 1, 2, 3, 4 und 5, wobei die Metallstrukturen (200, 2100, 2110, 2160, 2320) vorher einer Behandlung unterworfen werden, die aus Reinigung, Galvanisierung und dem Auftragen einer Korrosionsschutzschicht besteht.

7. Verfahren nach Anspruch 1, 2, 3, 4 und 5, wobei die Metallstrukturen (200, 2100, 2110, 2160, 2320) vorher einer Reinigung, Galvanisierung und dem Auftragen einer Zwischenschicht und einer Korrosionsschutzschicht unterworfen werden.

8. Verfahren nach Anspruch 1, 2, 3, 4 und 5, wobei die Metallstrukturen (200, 2100, 2110, 2160, 2320) vorher einer Reinigung, Galvanisierung und dem Auftragen einer Zwischenschicht, einer Deckschicht und einer Korrosionsschutzschicht unterworfen werden.

9. Verfahren nach Anspruch 1, 2, 3, 4, 5, 6, 7 und 8, wobei die viskoelastische Schicht (300, 3100, 3110, 3160, 3320) plastiziertes Polyvinylchlorid ist.

10. Verfahren nach Anspruch 1, 2, 3, 4, 5, 6, 7, 8 und 9, wobei die Metallstrukturen (200, 2100, 2110, 2160, 2320) die Unterseiten (2341) von Kraftfahrzeugkarosserien (2340) sind.

11. Metallstruktur behandelt nach dem Verfahren gemäß Anspruch 1, 2, 3, 4, 5, 6, 7, 8 und 9.

12. Metallstruktur nach Anspruch 11, wobei die Metallstruktur (200, 2100, 2110, 2160, 2320) die Unterseite (2341) einer Kraftfahrzeugkarosserie (2340) ist.

## Revendications

1. Procédé pour réaliser des structures en métal (200; 2100; 2110; 2160; 2320) résistant à la corrosion, insonores et résistant aux vibrations, qui comprend les étapes suivantes:
a) le masquage des parties nécessaires (201; 2102; 2112; 2161; 2321) de la surface desdites structures en métal (200; 2100; 2110; 2160; 2320) par des éléments de masquage (100; 1100; 1110; 1160; 1320),
b) l'application d'un traitement de surface, et
c) le retrait desdits éléments de masquage (100; 1100; 1110; 1160; 1320) de la surface desdites structures en métal (200; 2100; 2110; 2160; 2320),
caractérisé en ce que
d) lesdits éléments de masquage (100; 1100; 1110; 1160; 1320) sont fabriqués par formage sous vide d'une feuille en mousse thermoplastique, et
e) le traitement de surface est un revêtement en un matériau viscoélastique (300; 3100; 3110; 3160; 3320) de la surface de ladite structure en métal (200; 2100; 2110; 2160; 2320).

2. Procédé selon la revendication 1, dans lequel les surfaces planes (201) de ladite structure en métal (200; 2100; 2110; 2160; 2320) sont protégées par l'élément de masquage A (100) ou B (1100), les parties en saillies (2102) de ladite structure en métal (200; 2100; 2110; 2160; 2320) sont protégées par les éléments de masquage B (1100),les trous (2112, 2161) de ladite structure en métal (200; 2100; 2110; 2160; 2320) sont protégés par l'élément de masquage C (1110; 1160) et les parties étendues (2321) de ladite structure en métal (200; 2100; 2110; 2160; 2320) sont protégées par les éléments de masquage D (1320), dans lequel ledit élément de masquage A (100) comprend un corps (101) en forme de récipient consistant en un fond (101A) et une ou des parois perpendiculaires (101B) qui s'étend(ent) vers le haut à partir de la périphérie dudit fond (101A), et une couche adhésive (102) formée sur la surface inférieure dudit corps (101), ledit élément de masquage B (1100) comprend un corps (1101) en forme de récipient consistant en un fond (1101A), une ou des parois perpendiculaires (1101B) qui s'étend(ent) vers le haut à partir de la périphérie dudit fond (1101A) et un rebord (1102) qui s'étend à partir du ou des bords supérieurs de la ou desdites parois (1101B), et une couche adhésive (1103) formée sur la surface dudit rebord (1102), ledit élément de masquage C (1101; 1160) consiste en une partie d'insertion ou en une partie en saillie en forme de récipient consistant en un fond (1111A; 1161A) et une ou des parois perpendiculaires (1111B; 1161B) qui s'étend(ent) vers le haut à partir de la circonférence dudit fond(1111A; 1161A), et ledit élément de masquage D (1320) consiste en un corps (1321) en forme de récipient qui comporte une fente (1322) formée à partir de l'extrémité ouverte dudit corps (1321).

3. Procédé selon la revendication 2, dans lequel lesdits éléments de masquage A (100) sont fixés sur les surfaces planes (201) desdites structures en métal (200; 2100; 2110; 2160; 2320) par ladite couche adhésive (102), lesdits éléments de masquage B(1100) sont fixés aux surfaces planes (2101) ou recouvrent les parties en saillie (2102) desdites structures en métal (200; 2100; 2110; 2160; 2320) par ladite couche adhésive (1103), lesdits éléments de masquage C (1110; 1160) sont fixés dans les trous (2112; 2161) desdites structures en métal (200; 2100; 2110; 2160; 2320) par insertion desdites parties d'insertion desdits éléments de masquage C (1160) dans lesdits trous (2112; 2161) ou en fixant sur eux lesdites parties en saillie desdits éléments de masquage C (1110), et lesdits éléments de masquage D (1320) sont fixés sur les parties étendues (2321) desdites structures en métal (200; 2100; 2110; 2160; 2320) en insérant lesdites parties étendues (2321) dans ladite fente (1322) desdits éléments de masquage D (1320).

4. Procédé selon les revendications 1, 2 et 3, dans lequel lesdits éléments de masquage (100; 1100; 1110; 1160; 1320) sont fabriqués par formage sous vide d'une feuille en mousse thermoplastique laminée avec un film thermoplastique sur un côté ou sur les deux côtés de ladite feuille en mousse thermoplastique.

5. Procédé selon les revendications 1, 2, 3 et 4, dans lequel lesdits éléments de masquage (100; 1100; 1110; 1160; 1320) sont fabriqués par formage sous vide d'une feuille en mousse de polystyrène.

6. Procédé selon les revendications 1, 2, 3, 4 et 5, dans lequel lesdites structures en métal (200; 2100; 2110; 2160; 2320) sont préalablement soumises à un traitement consistant en un nettoyage, un revêtement par électro-déposition et un revêtement anticorrosion.

7. Procédé selon les revendications 1, 2, 3, 4 et 5, dans lequel lesdites structures en métal (200; 2100; 2110; 2160; 2320) sont préalablement soumises à un nettoyage, un revêtement par électro-déposition, un revêtement intermédiaire et un revêtement anticorrosion.

8. Procédé selon les revendications 1, 2, 3, 4 et 5, dans lequel lesdites structures en métal (200; 2100; 2110; 2160; 2320) sont préalablement soumises à un nettoyage, à un revêtement par électro-déposition, un revêtement intermédiaire, un revêtement de surface et un revêtement anticorrosion.

9. Procédé selon les revendications 1, 2, 3, 4, 5, 6, 7 et 8, dans lequel ladite couche viscoélastique (300; 3100; 3110; 3160; 3320) est en chlorure de polyvinyle plastifié.

10. Procédé selon les revendications 1, 2, 3, 4, 5, 6, 7, 8 et 9, dans lequel lesdites structures en métal (200; 2100; 2110; 2160; 2320) sont constituées par les faces intérieures (2341) de caisses (2340) d'automobiles.

11. Structure en métal traitée par le procédé selon la revendication 1, 2, 3, 4, 5, 6, 7, 8 et 9.

12. Structure en métal selon la revendication 11, dans laquelle ladite structure en métal (200; 2100; 2110; 2160; 2320) est constituée par la face inférieure (2341) de la caisse (2340) d'une automobile.
